# EUROPEAN PATENT SPECIFICATION

(11) **EP 2 757 209 B1**
(45) Date of publication and mention of the grant of the patent: **30.11.2016**
(21) Application number: 14151962.9
(22) Date of filing: 21.01.2014
(51) Int. Cl.: E04B 2/74

(54) **Frame and frame part for forming a frame for supporting a wall**
Rahmen und Rahmenteil zum Formen eines Rahmens zum Stützen einer Mauer
Cadre et partie de cadre pour former un cadre destiné à soutenir un mur

(30) Priority: 21.01.2013 NL 2010155
(43) Date of publication of application: 23.07.2014
(73) Proprietor: Wezo, 1611 CM Bovenkarspel (NL)
(72) Inventor: Weernink, Leendert, 1611 CM Bovenkarspel (NL)
(74) Representative: van Oeffelt, Abraham

(56) References cited:
- DE-U- 7 337 909
- GB-A- 1 257 031
- JP-A- H07 247 613

## Description

The present invention relates to a frame and to a frame part for forming a frame for supporting a wall and configured to enable fixing of wiring or conduits thereto.

In order to fix wiring and conduits to and support them on walls it is known to use special holders for the purpose. The American patent US 4 560 126 for instance describes a holder for supporting a conduit. A special holder for supporting or anchoring conduits on a wall does however require additional undesirable steps in a production process and is time-consuming in use.

It is also known to make a cut-out in the wall or nearby uprights, wherein a part of the wall or upright can be bent round into the cut-out in order to form a support or anchoring. Such cut-outs however weaken the wall or the uprights. With the existing cut-outs local weakening results in relative peak loads in the corners of the cut-outs, thereby increasing the chance of local collapse.

The use of cut-outs and bendable tabs is further known from the American patent US 4 523 418 in which a modular construction system is described. The cut-outs of US 4 523 418 have the drawback that, despite the tabs being substantially round, peak loads can occur on and around the fold lines of the tabs and the chance of splitting in random directions is considerable. The German patent publication DE 73 37 909 discloses the preamble of claim 1. The Japanese patent publication JP H07 247613 describes a frame part with a semicircular tab which has the purpose of facilitating the bending of the tab so that no deformation occurs. The embodiments shown in this publication however also have the drawback of the chance of splitting away from the corners of the punched edges.

It is therefore an object of the present invention to provide a cut-out in a wall or upright, wherein the weakening is limited. The invention comprises for this purpose a frame part according to claim 1.

The closed path of the arcuate forms of the cut-out and the bend lines of the tabs ensure that possible peak loads around the cut-out cannot be transmitted into the frame part and the structural integrity of the frame part is preserved. The arcuate form of the cut-out also provides the advantage that load on the frame part, and running all around the cut-out, can be evenly distributed over the frame part.

In order to form two bendable tabs by means of two arcuate parts, in an embodiment the two arcuate parts can each be connected halfway along to each other. When the arcuate forms have substantially the same shape, two tabs of substantially the same form can hereby also be formed. The tabs are in this case substantially half-moon-shaped. The two arcuate forms can also be connected to each other by a cut-out substantially enclosed by the arcuate parts. The cut-out then lies inside the arcuate form, whereby no structural weaknesses are formed in the frame part outside the cut-out.

In an embodiment of the present invention the free outer ends of the tabs are directed toward each other in the non-bent position. In bent position they will be bent toward opposite sides, whereby a cable or a conduit can be fixed on two different sides of the cut-out to the frame part.

In a further embodiment the frame part is also provided with means for mutually connecting frame parts. By mutually connecting or attaching the frame parts a frame can be formed for supporting for instance a wall part. The means for mutually connecting the frame parts are formed separately of the fixing means for the cable or conduit.

The present invention also relates to a frame formed by at least two of the above described frame parts. Such a frame can guide and hold different cables or conduits in place by means of the fixing means and can also serve for placing of for instance an upright wall thereagainst. A frame can for instance consist of a number of vertical and horizontal frame parts which, as combination of uprights and girders, form a lattice.

The invention also relates to a method for fixing a cable or a conduit to a frame part, comprising the steps of placing conduits along the frame part and anchoring the conduits on the frame part by means of bending the bendable tab of the frame part.

The invention will be further elucidated with reference to the following non-limitative figures. Herein:
- Figure 1 shows a schematic view of the invention;
- Figure 2 shows a detail view of the cut-out;
- Figure 3 shows a schematic view of the prior art; and
- Figure 4 shows an application of the invention.

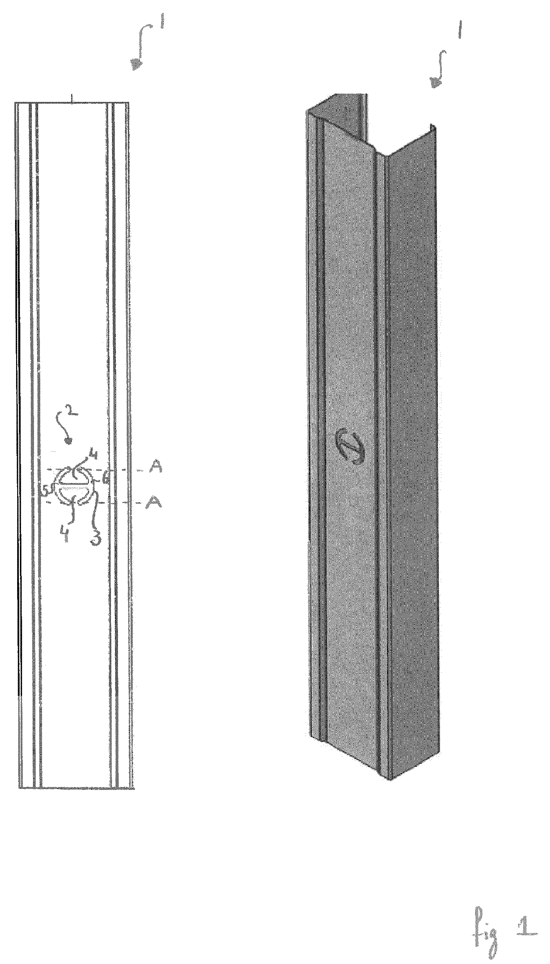

Figure 1 shows a frame part 1 configured to form in combination with similar uprights and girders a frame for supporting a wall. The frame part is provided with a fixing means 2 for a cable. Fixing means 2 is formed by a cut-out 3 in frame part 1, wherein cut-out 3 partially encloses two tabs 4, each bendable along a bend line A, and cut-out 3 comprises two arcuate forms 5 and 6, wherein the bend lines and the arcuate forms of the at least two tabs together describe a substantially closed path.

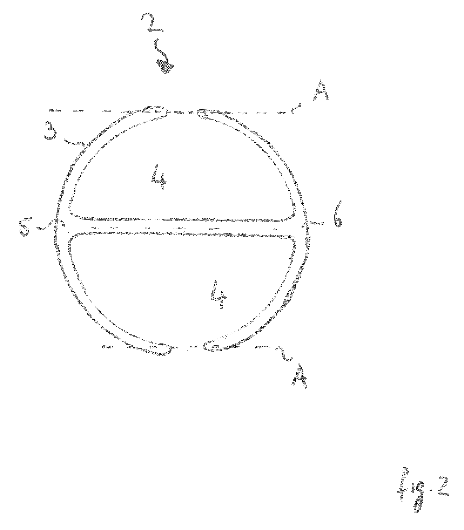

Figure 2 shows a detail view of cut-out 2. Figure 2 shows in detail the cut-out 3 provided with half-moon-shaped tabs 4 and the two arcuate forms 5 and 6 in addition to bend lines A. By placing a cable behind a tab 4, substantially in line with bend line A, and subsequently bending tab 4 the cable can be clamped between the frame part and the bent tab, whereby the cable is fixed to the frame part. Also shown is that the cut-outs meet the bend line A substantially tangentially, whereby the chance of splitting and weakening is limited to a minimum. As shown, tabs 4 are solid, i.e. without further recess or internal weakening.

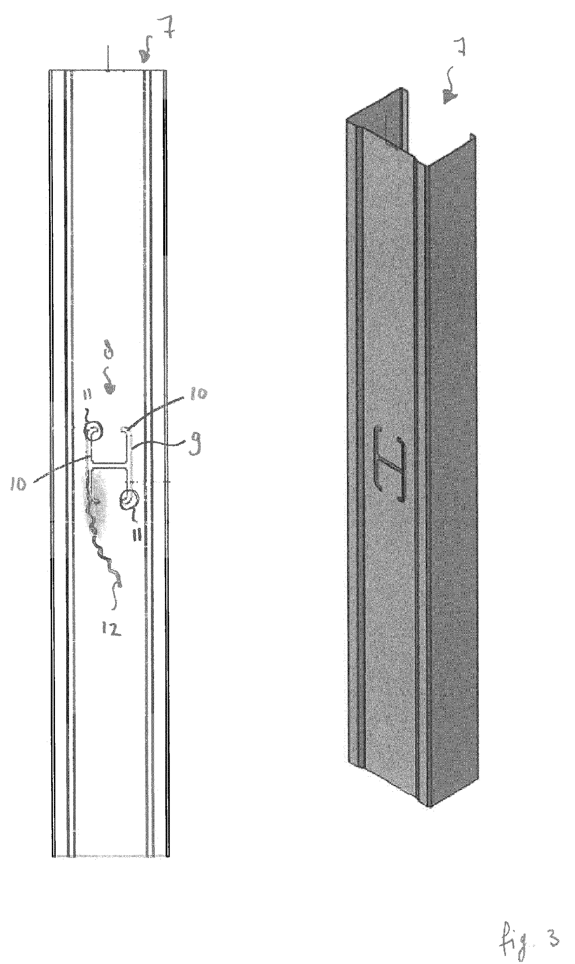

Figure 3 shows a frame part 7 provided with a fixing means 8 for a cable, wherein cut-out 9 is not formed by arcuate parts but by substantially straight lines 10. Peak loads can occur here at corner points 11 of cut-out 9, which may result in splits 12 in the frame part which can weaken the frame part.

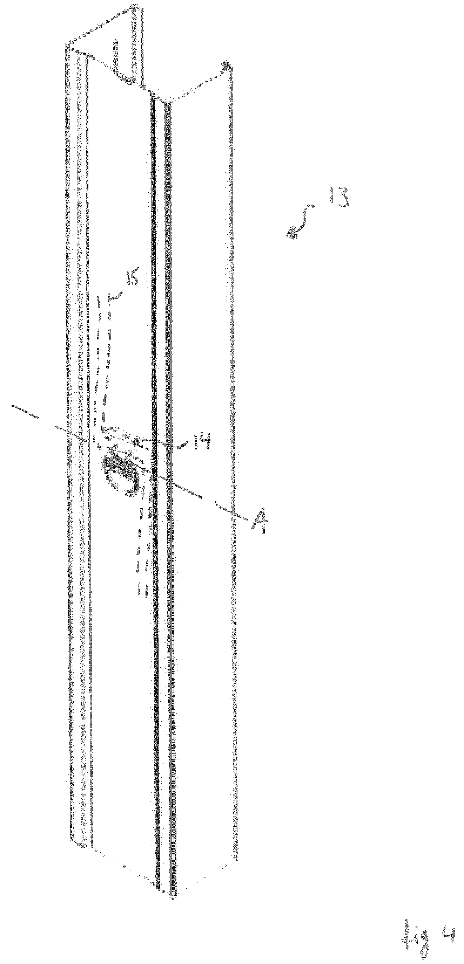

Figure 4 shows a frame part 13 as shown in figures 1 and 2, wherein a tab 14 is a bent round a cable 15 for the purpose of fixing the cable to the frame part. Tab 14 is bent here along bend line A, with the cable just above the bend line. The tab is hereby bent round the cable, this resulting in a cable fixed to the frame part.

## Claims

1. Frame part (1), particularly an upright or girder, configured to form in combination with similar uprights and girders a frame for supporting a wall; wherein
∘ the frame part comprises at least one cut-out (3) in the frame part, and
∘ wherein the cut-out at least partially encloses at least two tabs (4) , each bendable along a bend line (A);
**characterized in that** a fixing means for fixing a cable (15) or conduit is formed by the at least one cut-out; wherein
∘ the cut-out (3) comprises at least two arcuate forms (4) , wherein the bend lines (A) and the arcuate forms of the at least two tabs (4) together describe a substantially closed path, and
∘ wherein the cut-out (3) meets the bend line (A) substantially tangentially, whereby the chance of splitting and weakening is limited to a minimum.

2. Frame part as claimed in claim 1, wherein the two arcuate forms are connected to each other by a cut-out substantially enclosed by the arcuate parts.

3. Frame part as claimed in any of the foregoing claims, wherein the free ends of the tabs are directed toward each other in the non-bent position.

4. Frame part as claimed in any of the foregoing claims, wherein the tabs are substantially half-moon-shaped.

5. Frame part as claimed in any of the foregoing claims, also provided with separate means for mutually connecting frame parts for the purpose of forming a frame.

6. Frame part as claimed in any of the foregoing claims, wherein the tabs are solid, i.e. without further recess or internal weakening.

7. Frame, comprising frame parts as claimed in any of the foregoing claims.

## Patentansprüche

1. Rahmenteil (1),
insbesondere eine Stütze oder ein Träger, die bzw. der zum Bilden in Kombination mit ähnlichen Stützen und Trägern eines Rahmens zum Stützen einer Wand konfiguriert ist; wobei
- der Rahmenteil mindestens einen Ausschnitt (3) in dem Rahmenteil umfasst, und
- wobei der Ausschnitt mindestens zwei jeweils entlang einer Biegelinie (A) biegbare Laschen (4) teilweise umschließt;
**dadurch gekennzeichnet, dass** ein Befestigungsmittel zum Befestigen eines Kabels (15) oder einer Leitung durch den mindestens einen Ausschnitt gebildet wird; wobei
- der Ausschnitt (3) mindestens zwei Bogenformen (4) umfasst, wobei die Biegelinien (A) und die Bogenformen der mindestens zwei Laschen (4) zusammen einen im Wesentlichen geschlossenen Pfad beschreiben, und
- wobei der Ausschnitt (3) im Wesentlichen tangential auf die Biegelinie (A) trifft, wobei
die Möglichkeit einer Spaltung und Schwächung auf ein Minimum reduziert wird.

2. Rahmenteil nach Anspruch 1, wobei die zwei Bogenformen durch einen Ausschnitt, der von den bogenförmigen Teilen im Wesentlichen umschlossen ist, miteinander verbunden sind.

3. Rahmenteil nach einem der vorhergehenden Ansprüche, wobei die freien Enden der Laschen in der nicht gebogenen Position zueinander gerichtet sind.

4. Rahmenteil nach einem der vorhergehenden Ansprüche, wobei die Laschen im Wesentlichen halbmondförmig sind.

5. Rahmenteil nach einem der vorhergehenden Ansprüche, der ferner mit einem Trennmittel zum gegenseitigen Verbinden von Rahmenteilen zwecks Bildung eines Rahmens versehen ist.

6. Rahmenteil nach einem der vorhergehenden Ansprüche, wobei die Laschen massiv sind, das heißt keine weitere Aussparung oder innere Schwächung aufweisen.

7. Rahmen, der Rahmenteile nach einem der vorhergehenden Ansprüche umfasst.

## Revendications

1. Partie de structure (1), en particulier un montant ou une poutre, configurée pour former, en combinaison avec des montants ou poutres similaires, une structure servant à supporter un mur ; où :
- la partie de structure comprend au moins un évidement (3) dans la partie de structure, et
- l'évidement entoure au moins partiellement au moins deux pattes (4), chacune pliable le long d'une ligne de pliage (A) ;
**caractérisée en ce qu'**un moyen de fixation servant à fixer un câble (15) ou un conduit est formé par le ou les évidements ; où :
- l'évidement (3) comprend au moins deux formes arquées (4), les lignes de pliage (A) et les formes arquées des au moins deux pattes (4) définissant conjointement un parcours essentiellement fermé, et
- l'évidement (3) rejoignant la ligne de pliage (A) de façon essentiellement tangentielle, le risque de séparation et d'affaiblissement étant par conséquent limité à un minimum.

2. Partie de structure selon la revendication 1, dans laquelle les deux formes arquées sont raccordées l'une à l'autre par un évidement entouré essentiellement par les parties arquées.

3. Partie de structure selon l'une quelconque des revendications précédentes, dans laquelle les extrémités libres des pattes sont orientées l'une vers l'autre dans la position non pliée.

4. Partie de structure selon l'une quelconque des revendications précédentes, dans laquelle les pattes présentent essentiellement la forme d'une demi-lune.

5. Partie de structure selon l'une quelconque des revendications précédentes, comprenant également des moyens distincts servant à raccorder mutuellement des parties de structure dans le but de former une structure.

6. Partie de structure selon l'une quelconque des revendications précédentes, dans laquelle les pattes sont solides, c'est-à-dire sans autre cavité ou affaiblissement interne.

7. Structure comprenant des parties de structure selon l'une quelconque des revendications précédentes.
